# EUROPEAN PATENT SPECIFICATION

(11) **EP 0 441 415 B1**
(45) Date of publication and mention of the grant of the patent: **13.09.1995**
(21) Application number: 91107660.2
(22) Date of filing: 08.05.1990
(51) Int. Cl.: F15B 15/06, F16L 55/18

(54) **Inside processing apparatus**
Innenwand-Bearbeitungsgerät
Appareil de traitement du paroi interne

(30) Priority: 09.05.1989 JP 114282/89; 10.07.1989 JP 175507/89
(43) Date of publication of application: 14.08.1991
(62) Divisional of application: 90304946.8
(73) Proprietor: Kabushiki Kaisha Isekikaihatsu Koki, Shibuya-Ku Tokyo (JP)
(72) Inventor: Akesaka, Toshio, Yokohama, Kanagawa-ken (JP); Ogawara, Takashi, Funabashi-shi, Chiba-ken (JP)
(74) Representative: Pacitti, Pierpaolo A.M.E.

(56) References cited:
- DD-A- 263 329
- DE-U- 6 918 354
- GB-A- 2 093 380
- US-A- 2 955 579
- US-A- 3 407 710

## Description

The present invention relates to a rotary actuator which may be used in an inside processing apparatus for performing operations of cleaning, grinding, cutting and the like on the inside of piping such as a water supply pipe or a sewerage pipe laid under the ground, a gas pipe, a wire pipe and the like, or the inside of a tunnel and the like, and further an inside of steel pipe, a cylindrical face formed in steel ingot and the like.

At the present time, a concrete pipe, a steel pipe, an earthen pipe and the like having various diameter are laid under the ground as a water supply pipe and a sewerage pipe, a gas pipe, a wire pipe in the ground. Also, a steel pipe pile, a steel pipe-sheet pile and the like are used in the job site of civil engineering works.

The construction works including maintenance, repair, improvement or withdrawal and the like are performed in regard to the abovementioned various pipes. At this time, it becomes necessary that the processing meeting the purpose of respective construction works in the inside of pipe is given, and therefore various pipe interior working machines meeting the purpose of constructions works are provided.

Considering the works performed in regard to a sewerage pipe and the like for example, there are works of removing root of tree and the like which are projected into an inside of pipeline from a joint of pipeline and works of removing earth and sand attached to an inner wall of pipe-line and rust and the like. Also, considering the works performed in regard to a steel pipe pile, a steel pipe-sheet pile and the like, there is a cutting works on the occasion that these steel pipes are withdrawn.

Recently, a method of construction for repairing a portion of the sewerage pipe and the like which are corroded or destroyed partially has been developed. In this method of construction, grooves each having a fixed depth are formed at both sides in the axial direction of the repairing portion, and a plastic lining is performed by making reference to said grooves.

There are plentiful cases in which the working machine which is provided in order to perform the works as mentioned above is the so-called single capacity machine in which functions thereof are fixed, and said machine is constructed in such a manner that the tools including wire brush, milling cutter, end mill and the like are moved in the radial direction of pipeline by hydraulic cylinder and the like meeting the objective working, and said tools are rotated in the circumferential direction on an axial centre of the working machine.

For example, in case of grooves and the like being machined in the inner wall of pipe by using an end mill on the occasion of a partial repair of a pipeline, it becomes necessary that the end mill is moved in the radial direction according to an inside diameter in a pipe and a depth of a groove to be machined. But, it is difficult to stop the rod of the hydraulic cylinder in the middle of the stroke by controlling accurately a quantity of the hydraulic oil which is supplied into said cylinder. Accordingly, it is difficult to control the depth of said groove accurately, and so there is the possibility that an obstacle is constituted to plastic lining applied to the pipeline is in existence.

In the abovementioned machine for internal machining of a pipe, the development of a processing apparatus having combined functions in which a quantity of the movement of the tool can be set accurately in a radial direction of a pipeline has been desired.

US-A-2,955,579 discloses a hydraulic actuator capable of producing both linear and rotary movements. This actuator relies on use of separate hydraulic circuits to control the linear and rotary movements, respectively.

A principal purpose of the present invention is to provide a rotary actuator for use in an inside processing apparatus by which plural works can be performed in regard to an inside of a pipe.

The invention accordingly provides a rotary actuator comprising a cup-shaped piston moveable back and forth; a driving shaft coupled with the interior of the cup-shaped piston by threading a circumferential face of the driving shaft into an internal face of the cup-shaped piston to allow the driving shaft to rotate in response to rectilinear movement of the cup-shaped piston; characterised in that the cup-shaped piston is rotatable on its axis and has a spline on its circumferential face; a rotary member is provided which has a cylindrical shape and is rotatable on its axis, the rotary member having a spline on its internal face and engaging with the cup-shaped piston by interconnection of the spline on the piston with the spline on the rotary member; a fastening member is provided which is coupled with the rotary member for preventing and permitting rotation of the rotary member; and a casing is provided to accommodate the cup-shaped piston, the driving shaft and the rotary member.

An embodiment of the invention will now be described with reference to the drawings, in which:-
Fig. 1 is a side explanatory view of an inside processing apparatus incorporating the rotary actuator of the present invention;
Fig. 2 is a sectional explanatory view of the inside processing apparatus;
Fig. 3 is an explanatory view of transmitting system of a driving force in the apparatus;
Fig. 4 is an explanatory view of construction of the working head in the apparatus.
Fig. 5 is an explanatory view of operation of the working head in the apparatus; and
Fig. 6 is a sectional explanatory view of driving means of the inner teeth gear in the apparatus.

### Detailed description of the preferred embodiment;

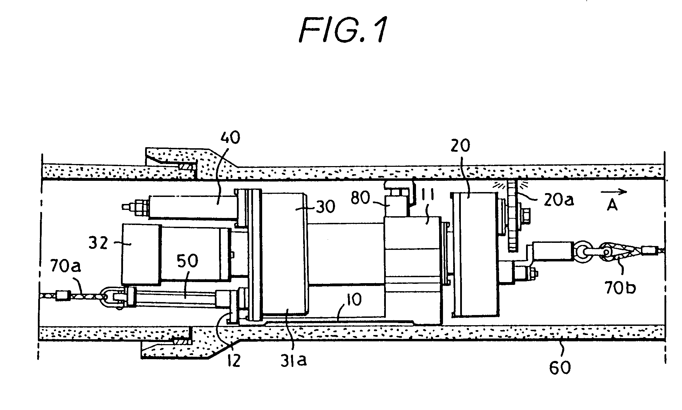

In the Fig. 1 an inside processing apparatus is shown as an apparatus for cutting a groove in a fixed position of the inside of pipeline 60 made of a concrete pipe.

A truck 10, which is in contact with an inner wall of the pipeline 60 and is drawn by cable 70a and 70b, is arranged in the pipeline 60. The truck 10 is formed in the front (cable 70b side in the drawing and so forth with a bracket), and in the rear (cable 70a side in the drawing and so forth with a bracket 12). On the abovementioned truck 10, a working head 20 which is furnished with a milling cutter as the working member 20a, a driving mechanism 30, a cutting controlling mechanism 40 are mounted to the bracket 11 movably in the front and rear directions. A feed mechanism 50 is comprised of a hydraulic cylinder, and a rod is secured to an expanding diameter portion 31a of the driving mechanism 30 where said cylinder is secured to the bracket 12. Therefore, the supply of hydraulic oil to the feed mechanism 50, makes possible that abovementioned respective mechanism 20 to 40 can be moved in the front and rear directions.

A bracket 11 which is formed on the truck 10 is provided with plural outriggers 80. These outriggers 80 are comprised of an hydraulic cylinder and are arranged at three places with a distance of 120 degrees for example round the outer circumference of the bracket 11. Therefore, the operation of the outriggers 80 by supplying the hydraulic oil to the outriggers 80 simultaneously, when the inside processing apparatus is secured to the pipeline 60, while that an axial center of the said inside processing apparatus can be coaxial with an axial center of the pipeline 60.

In the present enforcement example, the truck 10 is constructed so as to be able to be drawn by the cables 70a and 70b, however said truck can be also constructed as a self-propelled truck by that said truck 10 is provided with a wheel and mounted with the driving motor in the truck 10.

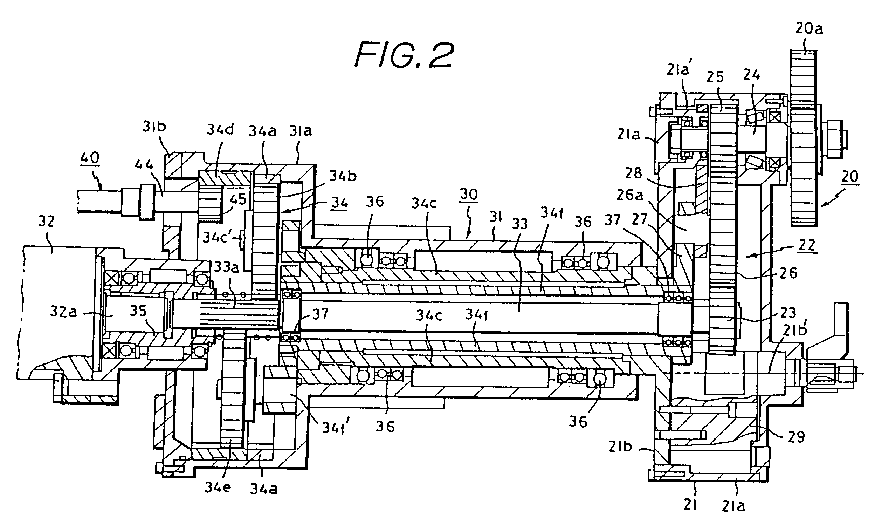

In the next place, the construction of the inside processing apparatus is explained concretely in accordance with Fig.2 to Fig.5.

The driving mechanism 30 is comprised of a case body 31 which is inserted in the bracket 11 of the truck 10, a motor 32 including an hydraulic motor, an induction motor and the like which becomes the source of power, said source of power secured being mounted on the end of the rear side of this case body 31, a shaft 33 which is mounted rotatably on the case body 11 and driven by motor 32, and a differential gear mechanism 34 which is disposed within an expanding diameter portion 31a formed at the end of rear side of the case body 31. The shaft 33 is disposed to be coaxial center of the inside processing apparatus.

Said shaft 33 is connected with an output axis 32a of the motor 32, through a sleeve coupling 35. A gear portion 33a is formed in the backward end portion of the shaft 33, and this gear 33a is constituted as the sun gear 33a in the differential gear mechanism 34. Also, the under-mentioned working head 20 is arranged on the front side of the shaft 33.

The differential gear mechnism 34 is comprised of two planet gear mechanism. Namely, the first planet mechanism is comprised of an internal gear 34a which is secured in the expanding diameter portion 31a, a first planet gear 34b which engages both with the sun gear33a and with this internal gear 34a, and an outside sleeve 34c on which an axis 34c is secured, said axis 34c supports this first planet gear 34b rotatably. Further, the second planet gear mechanism is comprised of an internal gear 34d which is disposed rotatably within a expanding diameter portion 31a, a second planet gear 34e which engages both with the sun gear 33a which engages with this internal gear 34d and an inside sleeve 34f on which an axis 34f is secured said axis 34f supporting this second planet gear 34e rotatably. The above-mentioned internal gear 34a and 34d are comprised of the same module with the same member of teeth, respectively and planet gears 34b, and 34e is also comprised of the same module with the same number of teeth respectively. Also, a gear 45 attached to the driving axis 44 of the driving means which constitutes the cutting controlling mechanism 40 is engaged with the internal gear 34d constituting the second planet mechanism.

The outside sleeve 34c is disposed on the same axis as an axis of the shaft 33, and is supported rotatably in the case body 31 through the bearing 36. The inside sleeve 34f is arranged between the outside sleeve 34c and the shaft 33, and is supported rotatably by the bearing 37 which is mounted on the shaft 33. Namely, the outside sleeve 34c is inserted in the case body 31 through the bearing 36, the inside sleeve 34f is inserted in this outside sleeve 34c, and further the shaft 33 is inserted in the inside sleeve 34f, so that each sleeve 34c, 34f and the shaft 33 can be rotated independently, respectively.

The working head 20 is comprised of a case 21 and a gear mechanism 22 which is mounted in this case 21.

The case 21 is comprised of a circular cam 21b which is secured on the outside sleeve 34c constituting the first planet gear mechanism, an arm 27 which is secured on the inside sleeve 34f and insereted by the circular cam 21b, and a head cover 21a which is connected with the second planet gear mechanism through a link mechanism comprised of a link plate 28.

The bearing portion 21a', for supporting an axis 24 on which a working member 20a is installed is formed at a fixed position of the head cover 21a, and the link plate 28 is rotatably mounted on this bearing portion 21a.

The circular cam 21b has a center 21b thereof at the position away from an axial center of the shaft 33 at a fixed distance, namely an axial center of the inside processing apparatus and said cam 21b is rotated on an axial center of the shaft 33 with a fixed ratio of rotation with the rotation of the shaft 33.

The gear mechanism 22 is comprised of a gear 23 which is secured to a front portion of the shaft 33, a gear 25 which is secured to the axis 24 which is supported rotatably on the head cover 21a and an intermediate gear 26 which is engaged with said gear 23 and 25.

Therefore, when the shaft 33 is driven, this rotation is transmitted to the axis 24 through the gear mechanism 22, and a fixed working is performed by rotating the working member 20a which is installed on the said axis 24.

Said intermediate gear 26 is supported rotatably on a axis 26a, also the axis 26a is supported rotatably on the arm 27, said arm 27 is secured on the front end portion of the inside sleeve 34f constituting the second planet gear mechanism. Further, the axis 26a mounted rotatably on the bearing portion 21a is supported rotatably on the link plate 28. Besides, the arm 27 is formed so that the rotating direction is limited by a stopper 29 attached to the circular cam 21b.

The cutting controlling mechanism 40 is fixed on a base 31b which is arranged in the backward portion of the case body 31.

Considering the cutting controlling mechanism 40 it is possible that a pulse motor by which amount of rotation of the driving, axis 44 is controllable, and a hydraulic motor and an induction motor and the like having a rotary encoder.

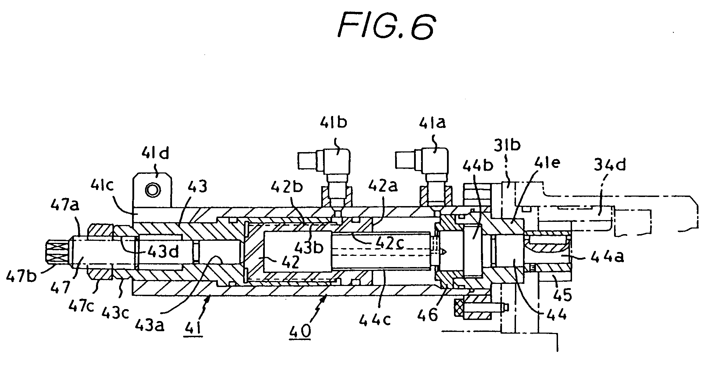

In the present enforcement example, a rotary actuator which is constituted as shown in Fig. 6 is used as the cutting controlling mechanism 40.

In the same drawing, a piston 42 by which a straight reciprocation and a rotating movement are possible in the formed and backward directions, a rotating member 43 which rotates the piston 42, the driving axis 44 which is rotated with a straight movement and a rotating movement of the piston 42, a bearing member 46 supporting rotatably the driving axis 44, and a limiting member 47 which is inserted in the rotation member 43 and limits the stroke of the piston 42 are arranged in the casing 41, respectively.

In a fixed position of the casing 41, ports 41a and 41b for sup@lying or exhausting the hydraulic oil in said casing 41 are arranged. Also, a slit 41c is formed in the end of rear side of the casing 41 and fastening members 41d are arranged in both ends of this slit 41c in a lateral direction. A bolt (not shown) is threaded into the contracting member 41d, the rotating member 43 is fixed to the casing 41 by fastening the slit 41c by means of this bolt, and a fixation of the rotating member 43 is released by loosening the bolt so that said rotating member 43 can be rotated.

The piston 42 is formed in a cup-shape having a flange 42a. Also, a spline 42b is formed in the outer circumference of the piston 42, while a threaded portion 42c having a fixed pitch is formed in the inner circumference.

A hole 43a engaging with the limiting member 47 is formed in the center of the rotating member 43, while a spline 43b engaging with the spline 42b formed in the piston 42 is formed in the front side thereof. Also, a chamfering portion 43c having nut-shape is formed in the outer circumference of the backward portion of the rotating member 43, while a threaded portion 43d is formed in the inner circumference of said chamfering portion 43c.

A gear 45 engaging with the internal gear 34d is attached to the front side 44a of the driving axis 44. A projection 44b having flange shape is formed over whole circumference in a fixed position of the driving axis 44, and the driving axis 44 is restricted by the bearing member 46 and a cap 41e which is attached to the front end portion of the casing 41. Therefore, the driving axis 44 can be able to rotate without movement thereof in the axial direction.

The threaded portion 44c engaging with the threaded portion 42c which is formed on the piston 42 is formed in the backward portion of the driving axis 44.

A threaded portion 47a engaging with the threaded portion 43d which is formed in the rotating member 43 is formed in the backward portion of the limiting member 47 and the chamfering portion 47b continuing on this threaded portion 47a is formed in the backward portion of the limiting member. Also, a lock nut 47c is screwed and combined in the screw portion 47a.

Concidering the rotary actuator is constructed as mentioned above, when the rotating member 43 is rotated by loosening the fastening member 41d and engaging a spanner with the chamfering portion 43c of the rotating member 43, this rotation is transmitted to the piston 42 through the splines 43b and 42b and then said piston 42 is rotated. And, the rotating movement of the piston 42 is transmitted to the driving axis 44 through the screw portion 42c and 44c so that said driving axis 44 is rotated. Consequently, the gear 45 which is attached to the driving axis 44 is rotated, and the internal gear 34d is rotated and moved. Therefore, the gear 45 can be rotated freely with the rotating movement of the rotating member 43, and it is possible that the initial radius can be set by moving the working member 20a in the radial direction by means of the rotation of this rotating member 43.

Also, when the hydraulic oil is supplied in the port 41b by constricting the fastening member 41d, where an moving member 43 is fixed to the casing 41, the piston 42 is restricted by the slines 42b and 43b so that the said piston is moved to the front of the axial direction (right direction in the drawing). The straight movement of this piston 42 can be converted into the rotating movement of the driving axis 44 by the threaded portion 42c and 44c. Therefore, a quantity of rotating movement of the driving axis 44 is limited by a stroke of the piston 42 and a lead of the screw in the screw portions 42c and 44c.

The stroke of the piston 42 can be limited by the limiting member 47 which is inserted in the rotating member 43.

Namely, when the limiting member 47 is rotated by loosening the lock nut 47c and engaging the spanner with the chamfering portion 47b, said limiting member 47 is moved in the axial direction by engaging the threaded portion 47a with the threaded portion 43d. Therefore, the stroke of the piston 42 can be limited by projecting the limiting member 47 into the casing 41 from the rotating member 43. When the stroke of the piston 42 is limited as mentioned above, a quantity of rotation of the gear 45 can be set, and consequently quantity of movement of the working member 20a in the radial direction can be set.

Then explanations with regard to the operation of the working head 20, the driving mechanism 30 and the cutting controlling mechanism 40 which are constituted as mentioned above are given. First, before the inside processing apparatus is inserted in the pipeline 60 which is suitable to the work performed with regard to said pipeline 60 is selected and this working member 20a is installed to the axis 24 which is arranged in the working head 20. And, the initial radius of the working member 20a is set according to the inside diameter of the pipeline 60.

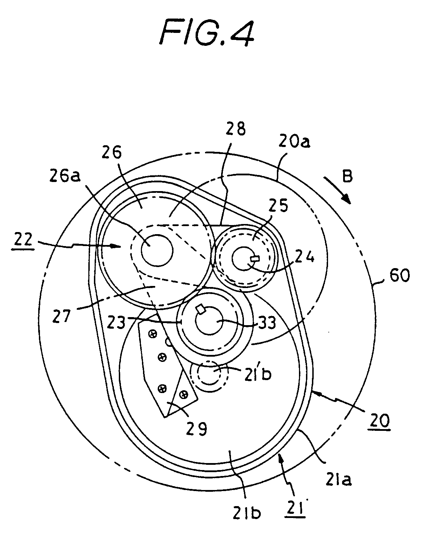

This setting can be made by rotating the rotating member 43 in the cutting controlling mechanism 40 at the state which the motor 32 is stopped, by rotating the internal gear 34d and the second planet gear mechanism. Namely, when the arm 27 rotates in the direction of the arrow B on the shaft 33 by means of the rotating movement of the second planet gear mechanism in the Fig.4, an intersecting angle between said arm 27 and the link plate 28 changes by the rotating movement of this arm 27 while the head cover 21a is rotated in the direction of the arrow B on the center 21 of the circular cam 21b. Since a distance between the working member 20a and the shaft 33 becomes longer both with a change of the intersecting angle in the link mechanism and with the rotating movement of the head cover 21a, said working member 20a can be moved in the radial direction of the pipeline 60. At this time, the initial radius is set so that a distance between the outer circumference of the working member 20a and the inner wall of the pipeline 60 may become a fixed value.

Secondly, a cutting depth of the working member 20a is set according to the depth of groove which should be formed by cutting in the pipeline 60. In this setting, according to a value which equals a distance between the inner wall of the pipeline 60 and the outer circumference of said working member 20a in the setting of the initial radius of the working member 20a a plus depth of the groove to be formed, the stroke of the piston 42 in the cutting controlling mechanism 40 is set. Therefore, a length of projection of the said member 47 into the casing 41 is set properly by locking rotating member 43 in the xasing 41, and rotating the regulating member 47 so that the stroke of the piston 42 is limited.

In this way, when a moving limit is obtained by moving said piston 42 in the casing 41 by limiting the stroke of the piston 42, a groove having a fixed depth can be machined in the pipeline 60 by the working member 20a.

Next, as mentioned above, the inside processing apparatus in which the initial radius and the cutting depth and the like of the working member 20 are preset is inserted in the pipeline 60, and said inside processing apparatus is pulled to the preset position, at which a groove is to be machined, by means of the wires 70a and 70b. And, when inside processing apparatus reaches to a fixed position by operating the outrigger 80, the inside processing apparatus is securely set to the pipeline 60 so that an axial center of the said inside processing apparatus coincides with the axial center of the pipeline 60.

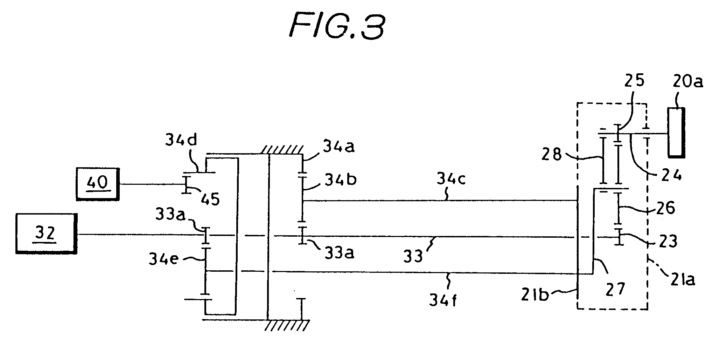

Next, the motor 32 is driven. The driving force of the motor 32 is transmitted in accordance with the system diagram as shown in Fig.3, and the sun gear 33a rotates, the working member 20a rotates while the first planet gear mechanism and the second planet gear mechanism are rotated at the same velocity respectively. Therefore, the circular cam 21b which constitutes the first planet gear mechanism and the arm 27 which constitutes the second planet gear mechanism rotates at the same velocity on the shaft 33. Thereby the working member 20a rotates under the condition that the predetermined initial radius is maintained on the shaft 33.

When the hydraulic oil is supplied in any of the port 41a or 41b under the above-mentioned condition, the piston 42 moves rightward or leftward in the casing41. Together with the movement of the piston, the gear 45 rotates , and the internal gear 34d is rotated and moved. At this time, because the relative difference in vilocity between the first planet gear mechanism and the second planet gear mechanism is made, the variation in the intersecting angle between the arm 27 and the link plate 28 and the rotating on the circular cam 21b are made. Since these motions are thus compounded, a distance between the working member 20a and the shaft 33 changes, and the initial radius of the said working member 20a changes.

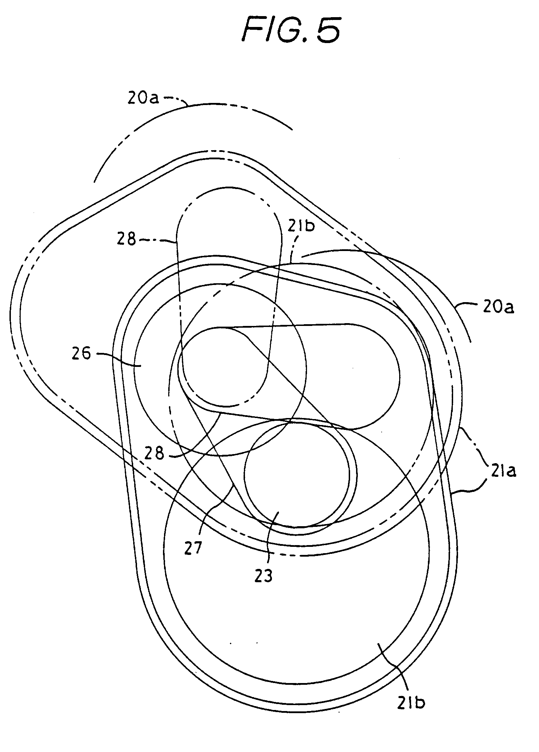

In the Fig.5, an operation of the working head 20 on the shaft 33(gear 23) in time when the above-mentioned relative difference in velocity between the first planet gear mechanism and the second planet gear mechanism is given in the differential gear mechanism 34 is typically shown, in which the shaft 33 and the middle gear 26 is fixed. In the drawing, a solid line indicates a condition that the initial radius of the working member 20a is set, and long and two short dashes line indicates a condition that the initial radius of the working member is converted into the working radius thereof by moving the piston 42.

As mentioned above, after fixed cutting is performed on the inner wall of the pipeline 60 by the working member 20a, when the supply of the hydraulic oil to the cutting controlling mechanism 40 is stopped, since the gear 45 is locked by the driving axis 44, the internal gear 34d is fixed. Therefore, the first planet gear mechanism and the second planet gear mechanism rotates at the same velocity respectively, and it is possible that a fixed groove is machined while the working member 20a is moved along the inner wall of the pipeline 60.

After the working member 20a makes one rotation along the inner wall of the pipeline 60, so that a fixed groove is machined in said inner wall, the hydraulic oil is supplied to the other port 41b or 41a, while the sun gear 33a is rotated or stopped. Thereby the piston 42 is moved rightward or leftward within the casing 41. With this movement, the gear 45 rotates so that the internal gear 34d is rotated. And, since a rotation of internal gear 34d is transmitted to the head cover 21a and said cover 21a is rotated on a center 21b of the circular cam 21b, the working member 20a is returned to the position of the initial radius.

Subsequently, when the outrigger 80 is detached from the pipeline 60, the inside processing apparatus is released from the pipeline 60. Therefore, it is possible that a groove is machined in the pipeline 60 by further forwarding to a fixed working position by means of the wires 70a and 70b and then repeating the same operation as the above.

In the above-mentioned embodiment, the case in which a groove is machined in the inner wall of the pipeline 60 by using a milling cutter as the working member 20a is given, but for example in the case in which a root of tree and the like protruded into the pipeline 60 are cut, a cutter for cutting may be installed on the axis 24, and also in the case in which the inner wall of the pipeline 60 is cleaned, a wire brush or a grinder and the like as the working member 20a may be installed on the axis 24. Further, in the case in which the pipeline 60 is cut, a discoid cutter and the like as the working member 20a are installed on the axis 24.

Also, in the above-mentioned embodiment, the inside processing apparatus is constructed so that the working member 20a is driven by transmitting the driving force of the motor 32 to the axis 24 through the shaft 33 and the gear mechanism 22, however, the inside processing apparatus may be constructed singly that the working member 20a can be driven by connecting an excusive motor to the axis 24. In this case, an axis of the rotation of the working member 20a can be also provided at right angles to the axis of the pipeline 60. Besides, in the second enforcement example, the case in which a groove is machined in the water pipe is explained, however, the inside processing apparatus in accordance with the present invention can be also used on the occasion that the inside processing including a cutting, a grinding and the like is applied to the cylindrical inner surface such as hydraulic cylinder, air cylinder, engine block and the like for example.

## Claims

1. A rotary actuator comprising :
a cup-shaped piston (42) moveable back and forth;
a driving shaft (44) coupled with the interior of the cup-shaped piston (42) by threading a circumferential face (44c) of the driving shaft (44) into an internal face (42c) of the cup-shaped piston (42) to allow the driving shaft (44) to rotate in response to rectilinear movement of the cup-shaped piston (42);
characterised in that:
the cup-shaped piston (42) is rotatable on its axis and has a spline (42b) on its circumferential face;
a rotary member (43) is provided which has a cylindrical shape and is rotatable on its axis, the rotary member (43) having a spline (43b) on its internal face and engaging with the cup-shaped piston (42) by interconnection of the spline (42b) on the piston (42) with the spline (43b) on the rotary member (43);
a fastening member (41d) is provided which is coupled with the rotary member (43) for preventing and permitting rotation of the rotary member (43);
and a casing (41) is provided to accomodate the cup-shaped piston (42), the driving shaft (44) and the rotatary member (43).

2. A rotary actuator according to Claim 1, further comprising a stroke length regulating means (47) coupled with the cup-shaped piston (42) to control the stroke thereof.

## Patentansprüche

1. Rotationsstellglied, bestehend aus:
einem topfförmigen Kolben (42), der hin- und herbeweglich ist;
einer Antriebswelle (44), die mit dem Innern des topfförmigen Kolbens (42) durch ein Verschrauben einer Umfangsfläche (44c) der Antriebswelle (44) in eine Innenfläche (42c) des topfförmigen Kolbens (42) hinein gekuppelt ist, um ein Drehen der Antriebswelle (44) in Abhängigkeit von der geradlinigen Bewegung des topfförmigen Kolbens (42) zu erlauben;
dadurch gekennzeichnet, daß:
der topfförmige Kolben (42) auf seiner Achse drehbar ist und einen Schiebekeil (42b) an seiner Umfangsfläche aufweist;
ein Rotationsglied (43) vorgesehen ist, das eine zylindrische Form aufweist und an seiner Achse drehbar ist, wobei das Rotationsglied (43) eine Keilnut (43b) an seiner Innenfläche aufweist und mit dem topfförmigen Kolben (42) durch das Zusammenwirken des Schiebekeils (42b) an dem Kolben (42) mit der Keilnut (43b) an dem Rotationsglied (43) im Eingriff ist;
ein Befestigungsglied (41d) vorgesehen ist, welches mit dem Rotationsglied (43) gekuppelt ist, um eine Drehung des Rotationsgliedes (43) zu verhindern und zu erlauben;
und ein Gehäuse (41) vorgesehen ist, um den topfförmigen Kolben (42), die Antriebswelle (43) und das Rotationsglied (43) aufzunehmen.

2. Rotationsstellglied nach Anspruch 1, welches weiterhin eine die Hublänge regulierende Einrichtung (47) aufweist, die mit dem topfförmigen Kolben (42) gekuppelt ist, um dessen Hub zu steuern.

## Revendications

1. Actionneur rotatif comprenant :
un piston (42) en forme de coupelle déplaçable vers l'arrière et l'avant ;
un arbre d'entraînement (44) molité à l'intérieur du piston en forme de coupelle (42) par vissage d'une face circonférentielle (44c) de l'arbre d'entraînement (44) dans une face interne (42c) du piston en forme de coupelle (42) de manière a' permettre a' l'arbre d'entraînement (44) de tourner en réponse à un mouvement rectiligne du piston en forme de coupelle (42) ;
caractérisé en ce que
le piston en forme de coupelle (42) est rotatif autour de son axe et comporte une clavette (42b) sur sa face circonférentielle ; il comprend un organe rotatif (43) de forme cylindrique et tournant autour de son axe, l'organe rotatif (43) comportant une rainure (43b) ménagée sur sa face interne et coopérant avec le piston en forme de coupelle (42) par interconnexion de la clavette (42b) du piston (42) avec la rainure (43b) de l'organe rotatif (43) ;
un organe de liaison (41d) est prévu et couplé à l'organe rotatif (43) pour empêcher et permettre la rotation de l'organe rotatif (43) ; et il est prévu un tube (41) pour recevoir le piston en forme de coupelle (42), l'arbre d'entraînement (44) et l'organe rotatif (43).

2. Actionneur rotatif selon la revendication 1, comprenant en outre des moyens de régulation de longueur de course (47) qui sont couplés au piston en forme de coupelle (42) afin de contrôler la course de ce dernier.
